# DEMANDE DE BREVET EUROPEEN

(11) **EP 1 982 760 A1**
(43) Date de publication de la demande: **22.10.2008**
(21) Numéro de dépôt: 08007232.5
(22) Date de dépôt: 11.04.2008
(51) Int. Cl.: B01J 20/26, C08L 33/06, C09K 3/00

(54) **Composition pulverulente pour absorber les liquides aqueux**

(30) Priorité: 13.04.2007 FR 0702704
(71) Demandeur: Revert, Olivier, 78270 Mericourt (FR)
(72) Inventeur: Revert, Olivier, 78270 Mericourt (FR)
(74) Mandataire: Thibon-Littaye, Annick

(57) **Abrégé**

L'invention concerne une composition pulvérulente pour absorber les liquides aqueux, notamment issus de fuites, à base de particules de polymère superabsorbant. Cette composition comporte des particules d'un premier polymère superabsorbant à vitesse d'absorption plus lente, formant après absorption d'eau un gel dense mécaniquement résistant, et des particules d'un deuxième et d'un troisième polymères superabsorbants à vitesse d'absorption plus rapide, parmi lesquels un deuxième polymère formant après absorption d'eau un gel en poudre fine et un troisième polymère; formant après absorption d'eau un gel à propriétés liantes.

## Description

La présente invention concerne la conception et la réalisation d'une composition pulvérulente pour absorber les liquides aqueux, qui est du type à base de particules de polymère superabsorbant. L'invention trouve plus particulièrement application dans l'utilisation d'une telle composition pour l'absorption de liquides aqueux issus de fuites, notamment en cas de dégât des eaux dans les constructions, mais la même composition peut être utilisée avec avantage pour tout liquide qui se répand ou risque de se répandre au sol ou sur toute autre surface.

Les moyens employés pour manipuler les liquides aqueux sont habituellement le stockage en récipients hermétiques (de toutes natures et contenances, du flacon à la citerne), et le confinement dans des canalisation hermétiques ou de type gouttière permettant l'acheminement (sous pression ou par gravité) vers un point désigné. Tous ces éléments présentent un risque de rupture ou de fuite accidentelle.

En cas de fuite de caractère accidentel, non maîtrisée et/ou gênante, il est fréquent que le liquide qui s'échappe du récipient ou de la canalisation s'étale au gré des surfaces qu'il parcourt, s'infiltre par des fissures, joints de dilation et ouvertures, s'imprègne et s'infiltre par capillarité dans les revêtements de sols et/ou les matériaux de construction. Pour finir, un développement bactérien est le plus souvent inévitable. Le liquide indésirable ne peut alors être éliminé qu'avec des moyens complexes, par des opérations contraignantes, dans des conditions aggravées par la nature des dommages et un caractère souvent d'urgence.

Différents types de techniques sont actuellement utilisées de façon courante pour absorber les liquides issus de fuites. La plus simple est le recours à des absorbants solides du type serpillières, serviettes éponges ou autres. Cette technique est très limitée en efficacité et en capacité d'absorption. Une autre technique consiste en l'utilisation de moyens électromécaniques du type à aspiration Ces moyens sont généralement encombrants ou de faible capacité, et ils sont contraignants à utiliser et à déplacer, en plus d'être associés à la nécessité de disposer d'une source d'alimentation électrique à proximité ainsi que de lieux où rejeter les effluents aspirés.

L'invention prévoit d'avoir plutôt recours à des matériaux chimiques à propriétés absorbantes, sous forme de poudre ou de granulés, qu'elle propose de répandre sur les flaques formées par le liquide ou sur le chemin de celui-ci de manière à assurer son absorption. Parmi ces matériaux absorbants figurent les polymères superabsorbants, notamment les polyacrylates à forte capacité d'absorption d'eau. Ces polymères se présentent généralement à l'état sec sous forme de poudres dont les particules gonflent en absorbant les liquides aqueux qui viennent à leur contact, pour former une masse de gel visqueuse qui retient l'eau absorbée. On évite ainsi que le liquide ne se répande intempestivement sur les surfaces. Ces absorbants physico-chimiques présentent l'avantage d'une grande simplicité d'utilisation. Le gel formé peut ensuite être récupéré par de simples moyens de ramassage mécanique.

Le document EP-A-0 494 599 décrit de tels polymères superabsorbants, qu'il envisage d'utiliser dans le cadre du domaine particulier des milieux médicaux, quand il s'agit d'absorber des liquides polluants en décontamination des outils et consommables souillés, en particulier pour en éliminer le sang ou le liquide amniotique dans les maternités. Les particules de polymère absorbant sont alors contenues dans un sachet soluble dans l'eau. Ce document ne se soucie aucunement de traiter le cas d'un liquide se répandant librement au sol ou sur une suface similaire.

La présente invention vise à proposer une composition pulvérulente à base de particules de polymère superabsorbant qui soit particulièrement bien adaptée pour absorber les liquides aqueux issus de fuites dans les constructions. L'objectif est donc notamment que la composition soit efficace pour absorber les liquides se répandant et pour obturer les interstices à travers lesquels le liquide pourrait s'infiltrer. L'objectif est aussi d'aboutir par absorption d'eau à un gel particulièrement facile à éliminer lors du nettoyage, qui permette de laisser les surfaces directement dans un état assurant la sécurité des usagers.

A cet effet, l'invention propose une composition pulvérulente pour absorber les liquides aqueux qui comporte, en mélange intime, des particules d'un premier polymère superabsorbant à vitesse d'absorption plus lente, formant après absorption d'eau un gel dense mécaniquement résistant, et des particules d'un deuxième et d'un troisième polymères superabsorbants à vitesse d'absorption plus rapide, parmi lesquels un deuxième polymère formant après absorption d'eau un gel sous forme de poudre fine, et un troisième polymère formant après absorption d'eau un gel pâteux à propriétés liantes pour l'ensemble.

Suivant une caractéristique avantageuse de l'invention, le deuxième polymère est en outre choisi de telle sorte que ses particules présentent après absorption d'eau une surface non mouillante, qui n'adhère pas à la surface qui a été mouillée par le liquide absorbé, si bien qu'elles ne forme pas de zones glissantes et qu'elles présentent des propriétés anti-glissement assurant que les surfaces sur lesquelles la composition a été dispersée ne retiennent pas de pellicule humide, qu'elles se retrouvent sèches et non glissantes après l'élimination du gel formé.

La composition selon l'invention est destinée à être utilisée par dispersion sur, ou à proximité, des liquides aqueux s'échappant de manière accidentelle dans tous lieux où ils sont indésirables. Elle s'applique tout aussi bien pour l'absorption des liquides aqueux à propriétés acides, basiques ou neutres.

Les propriétés du premier polymère assurent notamment une consistance ferme du gel formé par la composition après absorption d'eau. La capacité de ce polymère lui-même à se gélifier en un gel dense mécaniquement résistant se mesure en termes de densité volumique à l'état gonflé d'eau. Sa densité volumique propre à l'état de saturation est de préférence comprise entre 400 et 500 volumes de liquide pour un volume de produit sec. Les particules de ce premier polymère gonflent avantageusement sous forme de microbilles, dont le diamètre peut être de l'ordre de quelques millimètres, plus particulièrement de 2 à 3 mm en correspondance avec une granulométrie à l'état sec de 100 à 800 micromètres.

Les propriétés du deuxième polymère, avantageusement à gélification pulvérulente fine, assurent notamment que des particules de gel formées par absorption d'eau présentent une granulométrie suffisamment faible pour venir boucher les interstices à travers lesquels le liquide pourrait s'infiltrer dans la pièce où l'eau se répand. La granulométrie moyenne des particules du deuxième polymère à l'état de saturation est ainsi de préférence comprise entre 200 et 500 micromètres, pour une granumétrie initiale, à l'état sec, qui là aussi est de préférence comprise entre .

Enfin, le troisième polymère est choisi pour présenter comme le second polymère des propriétés d'absorption rapide par rapport à la vitesse d'absorption dite lente du premier polymère (qui conduit à des particules relativement grosses par rapport aux deux autres polymères), mais à la différence du second polymère, il est aussi pour une gélification pâteuse, conduisant à un gel non coulant, qui lui permet d'assurer une bonne cohésion mécanique de l'ensemble du gel formé par absorption d'eau. Par ses propriétés et sa proportion dans le mélange, il est choisi en particulier pour qu'une fois atteinte la saturation des particules en eau absorbée, les propriétés liantes du troisième polymère viennent en compensation des propriétés non mouillantes des particules du premier et du second polymère et faire en sorte en particulier que le premier polymère ne laisse pas de microbilles non liées qui pourraient rouler sous les pieds d'une personne marchant dessus.

De façon tout à fait avantageuse, par la combinaison des caractéristiques spécifiques et différentes respectives des polymères qui la constituent, la composition selon l'invention s'avère particulièrement efficace pour traiter le problème des dégâts des eaux dans les bâtiments, dans lesquels de l'eau se répand sur les surfaces et est susceptible de s'infiltrer dans de nombreux interstices. En effet, cette composition, qui se présente initialement sous forme de poudre sèche, forme rapidement (en quelques secondes seulement), lorsqu'elle est mise en contact avec un liquide aqueux, un gel par absorption d'eau. Ce gel présente une consistance suffisamment ferme, une cohésion mécanique et des propriétés anti-adhérentes suffisantes pour pouvoir être facilement éliminé par des moyens de nettoyage classiques, du type d'un ramassage mécanique avec un balai, une pelle, ou un aspirateur, tout en assurant que la surface laissée après l'élimination du gel ne soit pas glissante. La composition selon l'invention assure ainsi un bon degré de sécurité pour les usagers. Par absorption d'eau, la composition est en outre apte à obturer tous les interstices à proximité desquels elle est dispersée, si bien qu'il est impossible au liquide de s'infiltrer à travers ces interstices.

De nombreux polymères classiques peuvent être utilisés pour former la composition pulvérulente selon l'invention, le choix des polymères particuliers étant aisément accessible à l'homme du métier, en fonction des caractéristiques physiques de chacun des polymères définies selon l'invention.

La composition selon l'invention est en outre avantageusement conçue de manière à former un gel mécaniquement résistant même en cas de sur-saturation des particules de polymères par le liquide absorbé, c'est-à-dire lorsque les particules sont toutes entièrement gonflées par absorption d'eau et qu'il reste encore du liquide résiduel entre les particules.

Au moyen de la composition selon l'invention, le liquide issu de la fuite est très rapidement transformé en gel, de sorte qu'on récupère la maîtrise de son comportement et de ses effets. La composition permet de gélifier tout produit aqueux en quelques secondes, et de soustraire ainsi les éléments mouillés ou susceptibles de l'être du contact du liquide. Tout au plus, ces éléments seront alors en contact avec un gel qui ne présentera aucun risque d'entraîner leur dégradation. Ce gel pourra, si les particules qui le composent ne sont pas complètement gorgées d'eau, être encore avide d'humidité, de telle sorte qu'il constituera une barrière protégeant les éléments d'arrivées de liquide subséquentes, et apte à absorber le liquide au fur et à mesure de son arrivée à leur niveau.

La possibilité de figer ainsi tout liquide aqueux quasiment instantanément, à titre préventif ou curatif, offre une sécurité et une maîtrise que seuls les bacs de rétention des techniques classiques permettent d'approcher, et ce à grands frais contrairement à la composition selon l'invention, dont l'utilisation s'avère tout à fait avantageuse d'un point de vue économique.

La composition selon l'invention offre des avantages décisifs. En effet, selon le temps qui s'est écoulé entre l'incident et le moment où les premières mesures correctives peuvent être déployées, on peut notamment éviter ou limiter grâce à elle bon nombre de désagréments.

Le premier d'entre eux est le dommage en lui-même, qui se produit sur les éléments directement affectés ou détruits par aspersion et/ou détrempage. Plus long sera le contact direct avec le liquide, moindres seront les possibilités de sauvetage des éléments sinistrés. Dès cet instant la composition selon l'invention peut limiter les dommages en limitant ou en empêchant le contact direct avec le liquide, sur toutes sortes d'éléments mêmes fragiles, comme notamment les cartes électroniques.

Immédiatement après l'accident d'origine, le second désagrément est l'aggravation des dommages, par étalement du liquide, infiltration et imprégnation. Ces désordres représentent les plus graves menaces et souvent les plus coûteuses pour un sinistré. Pendant cette phase, la composition selon l'invention peut modifier le cours des choses de façon drastique en supprimant ou en limitant une, deux, ou les trois causes principales d'aggravation des dommages, soit de façon préventive si l'on a pris soin de disposer la composition aux emplacements clés d'un local que l'on doit protéger (par exemple au bas des portes ou au bas de murs perméables tels que des murs en parpaings), soit de façon curative en agissant au plus tôt après que l'incident soit apparu et en dispersant la composition manuellement (ou automatiquement) pour bloquer, autant que faire se peut, l'étalement, les infiltrations et les imprégnations. De ce fait, la composition selon l'invention permet de stabiliser ou de figer le dégât des eaux, de gagner un temps précieux sur la réparation ou le colmatage d'une fuite et de protéger les éléments exposés au sinistre.

La gélification de la composition suivant l'invention permet également d'empêcher ou de réduire considérablement les phénomènes d'imprégnation et de remontées capillaires dans les matériaux, qu'il s'agisse de bois, papier, tissus, bétons, parpaings, ete autres.

Lors de son utilisation, la composition selon l'invention au contact du liquide absorbe rapidement l'eau pour former une masse de gel qui constitue une barrière au passage de l'eau, et qui obture notamment les interstices à travers lesquels l'eau pourrait s'infiltrer grâce à la propriété de gélification pulvérulente du deuxième polymère. Cette masse présente en outre une bonne compacité du fait de la haute densité volumique du premier polymère et des propriétés liantes (c'est-à-dire assurant une bonne cohésion mécanique entre les particules) du troisième polymère à gélification pâteuse.

Ainsi, dès que le liquide a été gélifié, le désagrément d'une lente et progressive aspiration des liquides résiduels disparaît, de même que les inconvénients d'un pompage, de la mise en place de tuyaux et de la nécessité de disposer d'un point d'évacuation. La masse gélifiée peut facilement être éliminée à la pelle, au balai, à l'aspirateur (y compris un simple aspirateur à poussières si besoin est), et plus généralement par tout moyen mécanique ou manuel classique à disposition. Le gel peut alors être mis en sacs ou en bennes, ou tout simplement être laissé à sécher, le cas échéant dans des conditions accélérant le séchage. Après élimination de la masse de gel la surface inondée sur laquelle la composition avait été dispersée reste non glissante, grâce notamment aux propriétés non mouillantes des particules saturées d'eau du deuxième polymère et à la bonne cohésion de l'ensemble due aux propriétés liantes du troisième polymère à l'état gonflé d'eau.

Suivant des modes de réalisation préférés dans la pratique industrielle, l'invention répond en outre aux caractéristiques suivantes, mises en oeuvre séparément ou en chacune de leurs combinaisons techniquement opérantes.

Ces caractéristiques tiennent notamment compte du fait que la composition selon l'invention est destinée à être répandue en tous lieux où une fuite d'eau est susceptible de se produire, et où des personnes peuvent être présentes. Ainsi, pour des raisons d'hygiène et de sécurité d'emploi, les constituants de la composition selon l'invention ne possèdent aucune caractéristique dangereuse pour les individus. Ils sont notamment inodores, neutres, non toxiques, non irritants, non corrosifs, non carcinogènes, non mutagènes et ininflammables.

Les trois polymères qui constituent l'essentiel de la composition sont tous trois des superabsorbants, se présentant à l'état sec sous forme d'une poudre dont la granulométrie est en général comprise entre 100 et 800 microns. La notion d'une vitesse d'absorption lente pour le premier ne s'exprime ici que par comparaison avec la vitesse d'absorption dite plus rapide pour les deux autres. Le temps d'absorption pour le premier polymère reste en lui-même rapide. A titre d'exemple, le premier polymère parvient à la saturation en eau en un temps de l'ordre de la minute, alors que pour le second et pour le troisième polymère, ce temps est moitié moindre, donc de l'ordre de 30 secondes.

Les différences de propriétés entre les polymères en termes de vitesse et quantité d'absorption d'eau se traduisent surtout entre le premier et les deux autres. Le premier est présent en quantité majoritaire dans l'ensemble et il présente une forte capacité d'absorption d'eau pour une faible expansion en volume. Ensemble le deuxième polymère et le troisième polymère sont présents en une quantité minoritaire dans le mélange des trois. Ils présentent une capacité de forte expansion en volume pour une plus faible quantité d'eau absorbée à saturation.

Selon une caractéristique avantageuse de l'invention, le premier polymère présente un faible rapport d'expansion de volume par volume de liquide absorbé, notamment compris entre 1,1 et 1,3 fois le volume de liquide absorbé, alors que le deuxième présente un fort rapport d'expansion, notamment d'environ 2 fois le volume de liquide absorbé. La capacité massique d'absorption d'eau est quant à elle de l'ordre de 400 à 500 grammes de liquide par gramme de particules sèches. La proportion du premier polymère étant d'au moins 50 % dans la composition complète, et de préférence de l'ordre de 70 % en poids, il s'ensuit que la composition selon l'invention combine avantageusement une grande efficacité d'action pour une expansion de volume faible, si bien que la pièce où a eu lieu la fuite d'eau n'est pas envahie de gel se formant et débordant de toutes parts.

La différence entre le deuxième et le troisième polymère concerne essentiellement les propriétés des particules après absorption d'eau à saturation, l'un conduisant à une poudre fine de particules individualisées, l'autre à une forme pâteuse capable de jouer le rôle de liant pour les autres particules venant du deuxième mais aussi du premier polymère. En ce qui concerne les proportions, le deuxième polymère est de prérence en quantité minoritaire par rapport à l'ensemble des deux polymères dits à absorption d'eau rapide. Dans l'ensemble des trois polymères il est de préférence en proportion inférieure à 10 % en poids.

Dans des modes de réalisation préférés de l'invention, le troisième polymère présente une grande vitesse d'absorption, s'expremant par une arrivée à saturation en un temps d'environ 10 à 15 secondes. La composition selon l'invention débute ainsi très rapidement l'absorption du liquide, par les propriétés du troisième mais aussi du deuxième polymère, et elle commence à former un gel solide très vite après la dispersion de poudre sur le liquide. Ceci empêche ainsi très rapidement celui-ci de se répandre.

Dans la composition initiale à l'état sec, les particules des trois polymères différents sont de préférence mélangées de façon homogène, de telle sorte que la poudre présente des propriétés sensiblement uniformes sur tout son volume. Dans des modes de réalisation préférés de l'invention, les polymères sont tous trois des copolymères d'acrylate de sodium et de méthacrylate de sodium. Ces polymères présentent l'avantage d'une bonne sécurité d'emploi, et d'une fabrication facile.

Les trois polymères utilisés présentent, conformément à l'invention, des propriétés de vitesse d'absorption d'eau et de capacité d'expansion, et des propriétés de consistance du gel formé, différentes et complémentaires, permettant dans leur combinaison d'atteindre les objectifs de la présente invention. Selon une caractéristique avantageuse de l'invention, les polymères sont présents dans des proportions respectives d'environ 60 à 80 % pour le premier, d'environ 5 à 10 % pour le deuxième, et d'environ 15 à 30 % pour le troisième, en poids du poids total du mélange. Ces valeurs permettent avantageusement d'obtenir les meilleures propriétés combinées de la composition selon l'invention, à savoir efficacité en termes de vitesse d'absorption, de capacité d'absorption, de faible expansion de volume au regard du volume d'eau absorbé, de consistance permettant l'obturation des interstices en même temps qu'un nettoyage facile par des moyens mécaniques conventionnels, et de propriétés d'anti-glissement. La composition selon l'invention allie ainsi efficacité, facilité et sécurité d'emploi, ainsi que facilité d'élimination.

La composition selon l'invention comporte en outre, de préférence, un agent bactéricide, notamment du nitrate d'argent, dans une proportion d'environ 0,001 à 0,01 %, notamment d'environ 0,005 %, en poids du poids total du mélange. Cet agent dans cette gamme de proportions permet avantageusement d'éliminer tout risque de contamination bactérienne sur le lieu de la fuite.

Dans des modes de réalisation préférés de l'invention, la composition se présente conditionnée en contenants fermés constitués en film transparent hydrosoluble, notamment à base d'alcool de polyvinyle. Ces contenants sont de préférence conçus, en fonction des caractéristiques de solubilité du film, pour permettre la libération totale de la composition en moins de 30 secondes dans des conditions usuelles où la température de l'eau n'est pas inférieure à 5 °C.

Ce mode de conditionnement de la composition selon l'invention est tout à fait avantageux par la facilité de mise en oeuvre qu'il présente pour l'absorption de liquides issus de fuites. Il est notamment particulièrement adapté à des applications préventives, par exemple sous des faux planchers, dans des locaux d'archivage, etc. Il suffit en effet de disposer des sachets dans les lieux où une inondation par fuite est susceptible de se produire. La composition pulvérulente restera protégée et rassemblée dans les sachets dans les conditions normales, et elle ne sera libérée, par perforation du sachet, que lorsqu'un liquide à absorber viendra au contact de ce dernier.

L'invention s'exprime également en termes d'utilisation de la composition pulvérulente pour l'absorption de liquides aqueux issus de fuites.

La mise en oeuvre de la composition selon l'invention pour une telle application est tout à fait simple. Dès que l'on s'aperçoit d'un épanchement ou d'une infiltration de liquide, il suffit d'ouvrir le contenant de la poudre et de saupoudrer cette dernière sur la flaque pour l'empêcher de s'étendre, ou devant une porte ou tout interstice pour constituer une barrière au passage du liquide. Il est également possible d'utiliser un moyen mécanique, tel qu'une petite pelle, pour former des raies de poudre. Celles-ci feront office de barrières au passage du liquide, par formation quasiment instantanée d'un gel dense dès le contact avec le liquide.

La composition selon l'invention est destinée à un usage en tous lieux, notamment dans un contexte professionnel (bureaux, ateliers, entrepôts, locaux d'archivage, locaux techniques ou informatiques...), ou pour les locaux privés habités (appartements, maisons, caves, parkings...). Son principal domaine d'application est le dégât des eaux, en tant que technique curative et/ou préventive. Elle peut néanmoins également être utilisée pour d'autres applications, en tirant notamment parti du fait que la bonne cohésion du gel qu'elle forme après absorption d'eau permet un ramassage facile.

L'invention sera maintenant plus avant précisée dans ses caractéristiques préférées et ses résultats avantageux, par la description détaillée du mode de mise en oeuvre particulier qui fait l'objet de l'exemple ci-après. Sauf stipulation contraire, toutes les grandeurs chiffrées ou autres indications seront exprimées en conformité avec la normalisation internationale d'une part, en quantités massiques d'autre part.

La composition pulvérulente selon l'invention comporte des particules de trois polymères superabsorbants, qui sont intimement mélangées les unes avec les autres de façon homogène. La composition se présente à sec sous forme de poudre blanche, finement pulvérulente. La granulométrie moyenne est de l'ordre de 500 microns, s'étalant sur une gamme de 100 à 800 microns.

Les polymères sont tous trois des polyesters acryliques, plus particulièrement des polyacrylates de sodium, et plus précisément encore des copolymères d'acrylate et de méthacrylate. Ils présentent des caractéristiques de rapidité, de capacité d'absorption et d'expansion différentes et complémentaires comme on l'a expliqué. La composition comporte également un agent bactéricide. Cet agent est le nitrate d'argent, qui possède un fort pouvoir désinfectant dans un large domaine, même à des concentrations très faibles. Il entre à 0,005 % en poids dans la composition.

Le premier polymère choisi conformément à l'invention, présent dans une proportion de 70 % en poids dans le mélange, a un temps de réaction de l'ordre de 25 à 35 secondes, et une capacité d'absorption d'eau élevée (supérieure à 500 g d'eau par gramme de polymère), avec un rapport d'expansion de volume par volume de liquide absorbé faible, de l'ordre de 1,1 à 1,3 fois. Sa densité volumique à l'état saturé d'eau est élevée, avec un gonflement inférieur à 1,5 fois le poids du volume de liquide absorbé. Au cours de la phase d'absorption, ses particules se transforment en microbilles translucides. Par lui-même et par l'agglomération sous l'effet de liant du troisième polymère à gélification pâteuse, on peut penser qu'il est essentiellement responsable de la formation d'une masse de gel ferme qui conserve une consistance permettant sa manipulation facile par des moyens mécaniques classiques (balai, pelle...). A sur-saturation en liquide, le gel qu'il forme se présente sous forme visqueuse permettant encore la manipulation par des moyens mécaniques.

Le deuxième polymère choisi conformément à l'invention, présent dans le mélange dans une proportion de 7 % en poids, a un temps d'absorption de l'ordre de 6 à 7 secondes. Au cours de la phase d'absorption, les particules se transforment en une masse poudreuse très légère, non compactable, non glissante et non adhérente qui est légèrement humide au contact. La granulométrie moyenne de cette masse poudreuse est inférieure à 800 micromètres.

Enfin, le troisième polymère choisi conformément à l'invention, présent dans une proportion de 23 % en poids dans le mélange, a un temps d'absorption de l'ordre de 5 à 8 secondes. Au cours de la phase d'absorption, ses particules gonflent en un gel collant, mais ferme et non coulant. Il joue le rôle de liant, d'abord pour le second polymère, puis également pour le premier, au fur et à mesure de la gélification de ces derniers.

Dans le domaine d'application du traitement du dégât des eaux, la composition formée de ces trois polymères, éventuellement additionnés de l'agent bactéricide, dispersée sur le liquide issu de la fuite, gonfle par absorption de ce liquide, et ce très rapidement grâce aux temps d'absorption rapides des deuxième et troisième polymères. L'écoulement du liquide est ainsi stoppé dans des temps très brefs. Les particules du premier polymère gonflent plus lentement, mais assurent l'absorption d'une grande quantité de liquide, en même temps qu'une faible expansion de volume, si bien que le gel formé n'occupe pas un volume trop important et gênant.

Le gel formé est dense, du fait de la consistance ferme conférée par le premier polymère, et compact grâce aux propriétés collantes du troisième polymère, qui joue un rôle de liant dans le gel. Grâce aux propriétés du deuxième polymère, ce gel n'adhère pas aux surfaces sur lesquelles il se forme, et il laisse ces dernières non glissantes. Il permet notamment de boucher les interstices afin d'éviter les infiltrations d'eau à leur travers. Il offre toutes les garanties de sécurité d'utilisation. Une fois le liquide absorbé, le gel formé s'avère facile à manipuler par des moyens mécaniques de manière à assurer son élimination de la pièce. Les surfaces qui en sont débarrassées restent non glissantes.

La composition selon l'invention peut être conditionnée de plusieurs façons, notamment en flacons de diverses contenances selon l'utilisation visée. Ces flacons peuvent être livrés accompagnés d'une petite pelle en plastique pour la manipulation de la poudre.

La composition peut également par exemple, être conditionnée en sachets, de différentes capacités et aspects (notamment sachets rectangulaires ou en forme de boudins), enveloppée dans un film hydrosoluble, à base d'alcool polyvinylique. Ces sachets sont constitués de manière à présenter une solubilité rapide dans les liquides aqueux (perforation du sac en moins de 15 secondes dans une eau à 12 °C), ce qui permet de libérer totalement la poudre en moins de 25 secondes. Les sachets sont quant à eux conditionnés en conteneurs du type boîtes ou fûts en polyéthylène, renfermant également un sachet déshydratant assurant le caractère anhydre de l'atmosphère à l'intérieur du conteneur.

La description qui précède explique clairement comment l'invention procède d'une manière que ne pouvait prédire l'homme de l'art et comment elle permet d'atteindre les objectifs qu'elle s'est fixés. En particulier, elle fournit une composition pulvérulente pour l'absorption de liquides aqueux, qui allie une bonne rapidité et une bonne efficacité d'action, ainsi qu'une bonne facilité et une bonne sécurité d'utilisation. Cette composition forme par absorption du liquide un gel mécaniquement résistant, qui peut être facilement manipulé par des moyens de nettoyage classiques en vue de son élimination.

## Revendications

1. Composition pulvérulente pour absorber les liquides aqueux issus de fuites dans les constructions, à base de particules de polymère superabsorbant, **caractérisée en ce qu'**elle comporte en mélange intime des particules d'un premier polymère superabsorbant à vitesse d'absorption plus lente, formant après absorption d'eau un gel dense mécaniquement résistant, et des particules d'un deuxième et d'un troisième polymères superabsorbants à vitesse d'absorption plus rapide, parmi lesquels un deuxième polymère formant après absorption d'eau un gel pulvérulent en poudre fine et un troisième polymère formant après absorption d'eau un gel à propriétés liantes.

2. Composition pulvérulente selon la revendication 1, **caractérisée en ce que** ledit premier polymère est en quantité majoritaire et **en ce qu'**il présente un faible rapport d'expansion de volume par volume de liquide absorbé, conduisant à une densité volumique inférieure à 1,5 fois la masse du volume de liquide absorbé et à des particules à saturation de 2 à 3 millimètres de granulométrie.

3. Composition pulvérulente selon la revendication 1 ou 2, **caractérisée en ce que** ledit troisième polymère présente un temps d'absorption d'eau d'environ 5 à 15 secondes.

4. Composition pulvérulente selon l'une quelconque des revendications 1 à 3, **caractérisée en ce que** lesdits polymères sont tous trois des copolymères d'acrylate de sodium et de méthacrylate de sodium.

5. Composition pulvérulente selon l'une quelconque des revendications 1 à 4, **caractérisée en ce que** lesdits polymères sont présents dans des proportions respectives d'environ 60 à 80 % pour ledit premier polymère, d'environ 5 à 10 % pour ledit deuxième polymère, et d'environ 15 à 30 % pour ledit troisième polymère, en poids du poids total du mélange.

6. Composition pulvérulente selon l'une quelconque des revendications 1 à 5, **caractérisée en ce que** le deuxième polymère est présent dans la composition en quantité minoritaire, **en ce qu'**il présente un fort rapport d'expansion de volume par volume de liquide absorbé, notamment de l'ordre de 2 fois le volume de liquide absorbé, et **en ce que** ses particules présentent après absorption d'eau une surface non mouillante et une granulométrie moyenne inférieure à 800 microns.

7. Composition pulvérulente selon l'une quelconque des revendications 1 à 6, **caractérisée en ce qu'**elle comporte en outre un agent bactéricide, notamment du nitrate d'argent, dans une proportion d'environ 0,001 à 0,01 %, notamment d'environ 0,005 %, en poids du poids total du mélange.

8. Composition pulvérulente selon l'une quelconque des revendications 1 à 7, **caractérisée en ce qu'**elle se présente conditionnée en contenants fermés constitués en film transparent hydrosoluble, notamment à base d'alcool de polyvinyle.

9. Composition pulvérulente selon la revendication 8, **caractérisée en ce que** ledit film est choisi avec une solubilité adéquate pour permettre la libération totale de ladite composition en moins de 30 secondes dans des conditions où la température de l'eau est d'au moins 5 °C.

10. Utilisation de la composition selon l'une quelconque des revendications 1 à 9 pour absorber un liquide aqueux issu d'une fuite.
